# EUROPEAN PATENT SPECIFICATION

(11) **EP 3 287 366 B1**
(45) Date of publication and mention of the grant of the patent: **11.03.2020**
(21) Application number: 16400037.4
(22) Date of filing: 25.08.2016
(51) Int. Cl.: B64C 25/56, B64D 25/18, B63B 43/02

(54) **AN AIRCRAFT WITH AN EMERGENCY FLOATATION SYSTEM**
FLUGZEUG MIT EINEM NOTSCHWIMMERSYSTEM
AERONEF DOTE D'UN SYSTEME DE FLOTTAISON DE SECOURS

(43) Date of publication of application: 28.02.2018
(73) Proprietor: AIRBUS HELICOPTERS DEUTSCHLAND GmbH, 86609 Donauwörth (DE)
(72) Inventor: Rappl, Johann, D-86655 Harburg (DE)
(74) Representative: GPI & Associés

(56) References cited:
- US-A- 3 189 301
- US-A1- 2014 319 265
- M Denante ET AL: "EASA.2007.C16 "Study on Helicopter Ditching and Crashworthiness"", , 9 July 2008 (2008-07-09), XP055360113, Retrieved from the Internet: URL:https://www.easa.europa.eu/system/file s/dfu/EASAfinalreport.pdf [retrieved on 2017-03-29]

## Description

The invention is related to an aircraft with an emergency floatation system, the emergency floatation system being activated upon an emergency landing of the aircraft on water, for preventing at least sinking of the aircraft.

Aircrafts that are foreseen for flight missions over areas of sea must be equipped with a suitable emergency floatation system that is activated upon an emergency landing of the aircraft on the water, for preventing at least sinking of the aircraft. Exemplary emergency floatation systems with landing gear mounted inflatable floatation devices resp. float bags that are adapted to keep an aircraft stable within certified limits are e. g. described in the documents EP 2 262 685 A1, US 2010/0230534 A1, US 7,309,267 B1 and WO 2003/26959 A2. Other exemplary emergency floatation systems with floatation devices resp. inflatable float bags that are mounted in upper parts of respective aircrafts are described in the documents EP 2 678 220 A1, US 3,189,301 and GB 364,827. Furthermore, already ditched aircrafts having respective emergency floatation systems that are already active can be prevented from capsizing or turning to their flank by devices and methods that are e. g. described in the documents WO 2015/193810 A1 and WO 2015/05797 A1.

More generally, respective requirements, i. e. underlying airworthiness standards are defined in applicable safety regulations and specifications, such as the US-American Federal Aviation Regulations (FAR) and/or the European Certification Specifications (CS) from the European Aviation Safety Agency (EASA). In particular, the safety regulations and specifications FAR Part 29 and FAR Part 27 resp. EASA CS-29 and EASA CS-27 define airworthiness standards for rotary wing aircrafts, according to which such rotary wing aircrafts must be equipped with the above-mentioned emergency floatation systems. These safety regulations and specifications further define an air pocket requirement for newly certified rotary wing aircrafts.

By way of example, this air pocket requirement can be complied with by provision of a suitable capsizing avoidance buoyancy system, e. g. comprising a roof mounted inflatable floatation device resp. float bag, in addition to a normal emergency floatation system. Such a roof mounted float bag is located in a given rotary wing aircraft comparatively close to respective main rotor blades of an associated main rotor and it is specifically needed when, upon an emergency landing of the given rotary wing aircraft on water, a respective sea state is above predetermined emergency floatation system limits of the normal emergency floatation system of the given rotary wing aircraft, as this could lead to a rotation of the rotary wing aircraft into a capsized position.

However, an unintended release of the capsizing avoidance buoyancy system during flight of the rotary wing aircraft, i. e. an unintended inflation of the roof mounted float bag, e. g. because of a system error, must be avoided as otherwise the inflated float bag may get in contact with the rotating main rotor blades. As this may cause damage and even rupture of one or more of the rotating main rotor blades, a crash of the rotary wing aircraft may become inevitable. Furthermore, non-activation of successive required actions upon an emergency landing of the given rotary wing aircraft on water, such as e. g. omission of release of the roof mounted float bag, which may be caused by unconsciousness of a respective aircraft crew, may result in capsizing of the given rotary wing aircraft despite the provision of the capsizing avoidance buoyancy system. Therefore, an applied inflation logic for the capsizing avoidance buoyancy system must be safe and reliable and should, preferably, be operator-independent.

It should be noted that a multiplicity of buoyancy systems with more or less operator-independent inflation logic already exists. This multiplicity of buoyancy systems relates, however, not necessarily to capsizing avoidance buoyancy systems, but more broadly to buoyancy systems in general, i. e. also to buoyancy systems that merely implement the above-described emergency floatation systems.

For instance, the document US 2012/0132741 A1 describes a semi-automated emergency buoyancy system for an aircraft that is configured for limiting the risk of untimely triggering. More specifically, this buoyancy system comprises at least one float and deployment means for deploying the float, as well as engagement means for activating the deployment means of the float. The buoyancy system further comprises at least two immersion sensors for issuing an order for automatic deployment of the float to the deployment means, which are provided with a memory containing a pre-established list of events and configured to deploy the float when a predetermined event occurs. However, the engagement means are activated only manually, i. e. they must be voluntarily activated by a person, e. g. a pilot of the aircraft, so that the emergency buoyancy system is not completely operator-independent.

The document EP 2 610 171 A1 describes an aircraft with an external life raft system outside a cabin that comprises an automatic system for water detection. More specifically, the external life raft system comprises life raft containers with associated life rafts on either side of a longitudinal aircraft axis, each life raft container having at least one water sensor and at least one vibration sensor. The external life raft system comprises electrical activation means for an automated activation of the life rafts by means of a logic circuit after a suitable analysis of data provided by the sensors. However, this automated activation is merely described with respect to the external life raft system, while activation and even provision of an emergency floatation system as described above is not described. In other words, the external life raft system is described as a stand-alone system with one step approach for water detection only.

The document XP055360113 (EASA.2007.C16, « Study on Helicopter Ditching and Crashworthiness », by DENANTE, ANTOMARCHI, COUANT and DELORME), which is considered as the closest prior art, describes in particular in chapter V.8. "Deployment (page 35-39)", the inflation of an additional EFS which can be done at three different moments, i.e. in flight, after ditching or after capsize. For Inflation in capsize position, the deployment is done automatically, after capsizing trough sensors (angle, immersion). If sensors do not work properly, inflation may not happen or contrarily could happen inopportunely.

The document US2014319265 describes a method of automatically triggering an emergency buoyancy system for a hybrid helicopter having a fuselage, two half-wings and two propulsive propellers. As per the method, said emergency buoyancy system is primed, and then if a risk of said hybrid helicopter ditching is detected, two retractable wing undercarriages are deployed, each wing undercarriage being fastened under a respective half-wing and being provided with at least one immersion sensor. Finally, if the beginning of said hybrid helicopter ditching is detected, at least one main inflatable bag suitable for being arranged under such fuselage and at least one secondary inflatable bag suitable for being arranged under each half-wing are inflated so as to ensure that said hybrid helicopter 20 floats in stable manner.

The document US3189301 describes a helicopter with a excess buoyancy member defined as a member providing a total buoyancy twice the quantity required to hold the helicopter with its normally vertical center plane in the plane of the water surface. The excess buoyancy member is in the form of an oblate sphere mounted centrally and laterally on the top-side of the rotor head. The buoyancy member is constructed of glass fiber reinforced plastic and is filled with low density rigid polyurethane foam. The excess buoyancy member is secured to the rotor head at four simple attachment points by lugs and bolts. Supplementary flotation members are mounted in the helicopter about its longitudinal center line, disposed in the nose and within the tail structure at a sensibly extreme aft position, respectively. A stabilizing effect of the principal flotation member, is then settled gradually as the water enters the body until the supplementary flotation members become effective to provide pitch stabilization, thereby preventing the nose or tail of the helicopter 1 of plunging.

Other buoyancy systems with more or less automated operator-independent inflation logic are e. g. described in the above-mentioned EP 2 678 220 A1. However, in none of the above described documents, a conventional emergency floatation system is combined with an additional capsizing avoidance buoyancy system.

It is, therefore, an object of the present invention to provide a new aircraft that efficiently combines a conventional emergency floatation system with an additional capsizing avoidance buoyancy system.

This object is solved by an aircraft with an emergency floatation system and a capsizing avoidance buoyancy system, the aircraft comprising the features of claim 1.

More specifically, according to the present invention the aircraft comprises an emergency floatation system, the emergency floatation system being activated upon an emergency landing of the aircraft on water, for preventing at least sinking of the aircraft. Furthermore, a capsizing avoidance buoyancy system is provided, the capsizing avoidance buoyancy system being activated if predetermined activation criteria are satisfied and only after activation of the emergency floatation system upon an emergency landing of the aircraft on water, for preventing at least capsizing of the aircraft.

Advantageously, the inventive aircraft comprises a combination of an emergency floatation system, which can e. g. be implemented by means of a conventional emergency floatation system, and a separate capsizing avoidance buoyancy system. The latter is preferably operator-independently, i. e. automatically triggered, e. g. by means of a suitable activation logic, in combination with the emergency floatation system. More specifically, the capsizing avoidance buoyancy system is preferentially only activated if the emergency floatation system is already activated and if capsizing of the aircraft must be expected, e. g. if the aircraft is rotating towards capsized position. Thus, the inventive aircraft implements a sequential approach, wherein the capsizing avoidance buoyancy system cannot be activated independent of the emergency floatation system.

By way of example, a suitable activation logic can be configured such that activation of the capsizing avoidance buoyancy system is only triggered under the following cumulative conditions:
- the aircraft has already ditched,
- the emergency floatation system is already activated, and
- the aircraft is already comprised in a process of rotating into capsized position, e. g. due to a respective sea state that is above predetermined emergency floatation system limits.
In this case, the capsizing avoidance buoyancy system preferably avoids capsizing of the aircraft, i. e. that the aircraft completely rotates upside down, and it preferentially guarantees an air pocket for crew members and passengers of the aircraft, as requested by the safety regulations and specifications FAR Part 29 and FAR Part 27 resp. EASA CS-29 and EASA CS-27.

According to one aspect, the capsizing avoidance buoyancy system comprises inflatable and inflating components, wherein the inflatable components are preferably inflated operator-independently, i. e. automatically if required. By way of example, the inflatable and inflating components can be realized by inflatable and inflating components that are currently already used for implementing conventional emergency floatation systems. These components preferably comprise one or more float bags together with a pressurized gas cylinder or a gas generator including an electrical activation system located within a container.

Preferably, the electrical activation system of the capsizing avoidance buoyancy system is supplied with electrical power from the inventive aircraft. Additionally, a sensor system is preferentially provided and adapted to detect at least a capsized condition of the inventive aircraft and/or, in case of a rotary aircraft, whether a respective main rotor is still rotating. This sensor system may comprise different types of water sensors and/or vibration sensors. Furthermore, a respective choice of positioning of the suitable sensor system in the inventive aircraft can be performed application-specifically.

As already described above, the operator-independent, i. e. automatic activation of the capsizing avoidance buoyancy system shall have as prerequisite the already activated emergency floatation system. This can e. g. be implemented by blocking the power supply to the electrical activation system or at least the sensor system of the capsizing avoidance buoyancy system as long as the emergency floatation system is not activated.

In summary, the inventive aircraft comprises a capsizing avoidance buoyancy system that is operator-independently, i. e. automatically activated, if required, on the basis of a suitable analysis of data provided by a respective sensor system. The latter advantageously allows for a detection of water and comprises a predetermined number of sensors, which are selected and positioned in the inventive aircraft in order to enable at least an extremely safe determination of the states "aircraft in flight" and "aircraft in water".

According to a preferred embodiment, the emergency floatation system comprises at least one float bag, the at least one float bag being inflated upon activation of the emergency floatation system.

According to a further preferred embodiment, the capsizing avoidance buoyancy system comprises at least one capsizing avoidance buoyancy device, the at least one capsizing avoidance buoyancy device being inflated upon activation of the capsizing avoidance buoyancy system.

According to a further preferred embodiment, inflation of the at least one capsizing avoidance buoyancy device is only enabled after inflation of the at least one float bag.

According to the invention, the capsizing avoidance buoyancy system comprises at least one capsizing evaluation unit, the at least one capsizing evaluation unit being activated after activation of the emergency floatation system upon an emergency landing of the aircraft on water, in order to determine whether the predetermined activation criteria are satisfied.

According to the invention, the at least one capsizing evaluation unit is electrically coupled to an associated power supply, wherein supplying power from the associated power supply to the at least one capsizing evaluation unit is only enabled after activation of the emergency floatation system.

According to a further preferred embodiment, the capsizing avoidance buoyancy system comprises at least one capsizing avoidance buoyancy device inflation unit, the at least one capsizing avoidance buoyancy device inflation unit being activated for inflating the at least one capsizing avoidance buoyancy device if the at least one capsizing evaluation unit determines that the predetermined activation criteria are satisfied.

According to a further preferred embodiment, the at least one capsizing avoidance buoyancy device inflation unit is electrically coupled to an associated power supply, wherein supplying power from the associated power supply to the at least one capsizing avoidance buoyancy device inflation unit is only enabled after the at least one capsizing evaluation unit determines that the predetermined activation criteria are satisfied.

According to a further preferred embodiment, the predetermined activation criteria are satisfied if a respective sea state is above predetermined emergency floatation system limits.

According to a further preferred embodiment, the predetermined activation criteria are satisfied if a respective inclination angle of the aircraft with respect to a vertical reference line is above a predetermined limit.

According to a further preferred embodiment, the predetermined activation criteria are satisfied if it is determined that the aircraft is comprised in a capsizing process.

According to a further preferred embodiment, activation of the capsizing avoidance buoyancy system is performed automatically and operator-independently.

According to a further preferred embodiment, a fuselage that defines a lower fuselage region and an upper fuselage region are provided, the emergency floatation system being at least partly arranged in the lower fuselage region and the capsizing avoidance buoyancy system being at least partly arranged in the upper fuselage region.

According to a further preferred embodiment, the aircraft is embodied as a rotary wing aircraft, in particular as a helicopter.

According to a further preferred embodiment, the rotary wing aircraft comprises a main rotor, wherein the predetermined activation criteria are satisfied if operation of the main rotor is discontinued.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a perspective view of an aircraft according to the invention,
- Figure 2 shows a schematic diagram of a capsizing avoidance buoyancy system actuation system according to the invention,
- Figure 3 shows an exemplary capsizing avoidance buoyancy device inflation sequence,
- Figure 4 shows an exemplary inadvertent capsizing avoidance buoyancy system activation fault tree, and
- Figure 5 shows an exemplary capsizing avoidance buoyancy system loss fault tree.

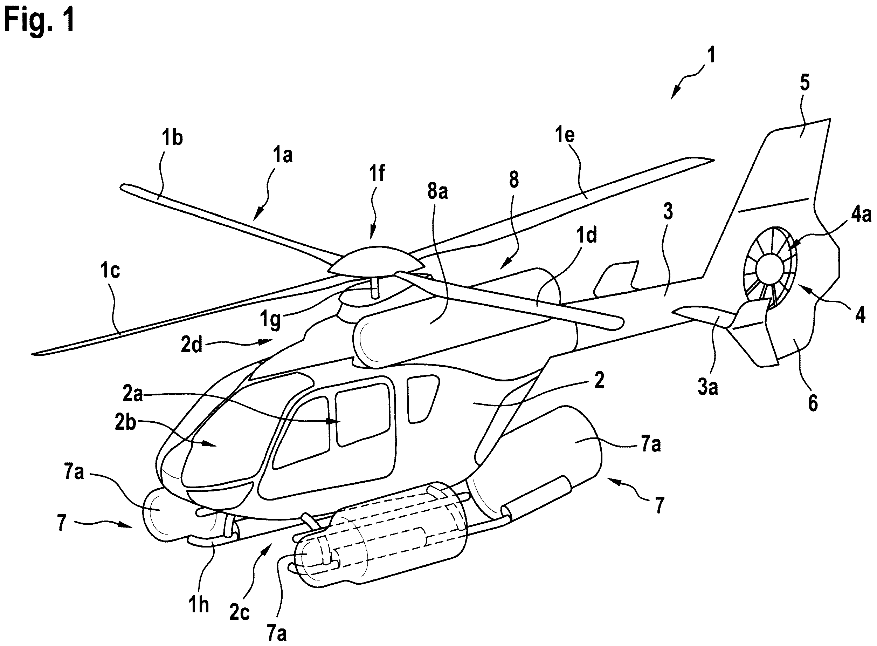

Figure 1 shows an aircraft 1 according to one aspect that is exemplarily illustrated as a rotary wing aircraft and, more particularly, as a helicopter. Thus, for purposes of simplicity and clarity, the aircraft 1 is hereinafter referred to as the "helicopter" 1.

Illustratively, the helicopter 1 comprises at least one multi-blade main rotor 1a for providing lift and forward or backward thrust during operation. The at least one multi-blade main rotor 1a preferably comprises a plurality of rotor blades 1b, 1c, 1d, 1e that are mounted at an associated rotor head 1f to a rotor shaft 1g, which rotates in operation of the helicopter 1 around an associated rotor axis.

Preferably, the helicopter 1 comprises a fuselage 2 that exemplarily defines a cabin 2a and a cockpit 2b. Illustratively, the fuselage 2 comprises a lower fuselage region 2c and an upper fuselage region 2d. The lower fuselage region 2c is preferably connected to a landing gear 1h, which is exemplarily embodied as a skid-type landing gear. The upper fuselage region 2d preferably defines a roof of the helicopter 1, where the rotor head 1f is exemplarily arranged.

Illustratively, the fuselage 2 is connected to a tail boom 3 and exemplarily comprises at least one preferentially shrouded counter-torque device 4 configured to provide counter-torque during operation, i. e. to counter the torque created by rotation of the at least one multi-blade main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a vertical stabilizer 5 that is provided with a bumper 6. Illustratively, the tail boom 3 is also provided with a suitable horizontal stabilizer 3a.

According to one aspect, the helicopter 1 comprises an emergency floatation system 7 and a capsizing avoidance buoyancy system 8. The emergency floatation system 7 is preferably adapted for being activated upon an emergency landing of the helicopter 1 on water, for preventing at least sinking of the helicopter 1. The capsizing avoidance buoyancy system 8 is preferably adapted for being activated if predetermined activation criteria are satisfied and only after activation of the emergency floatation system 7 upon an emergency landing of the helicopter 1 on water, for preventing at least capsizing of the helicopter 1.

The emergency floatation system 7 and the capsizing avoidance buoyancy system 8 are preferentially implemented as two separate systems, such that the emergency floatation system 7 can be operated independent of the capsizing avoidance buoyancy system 8. In other words, an activation of the emergency floatation system 7 does not necessarily entrain an activation of the capsizing avoidance buoyancy system 8. However, in any case at least activation of the capsizing avoidance buoyancy system 8 and, preferentially, activation of the emergency floatation system 7 and the capsizing avoidance buoyancy system 8 is triggered operator-independently, i. e. automatically.

According to one aspect, the emergency floatation system 7 comprises one or more float bags 7a, in particular inflatable float bags. Illustratively, four float bags 7a are provided, from which three float bags 7a are visible in Figure 1.

By way of example, the emergency floatation system 7 can be realized by using inflatable and inflating components that are currently already used for implementing conventional emergency floatation systems. Such components preferably comprise conventional float bags together with a pressurized gas cylinder or a gas generator including an electrical activation system located within a container. However, such conventional emergency floatation systems are well-known to the person skilled in the art, so that a more detailed description thereof can be omitted for brevity and conciseness.

The float bags 7a are preferably inflated upon activation of the emergency floatation system 7. Exemplarily, the float bags 7a are provided at least partly at the lower fuselage region 2c and, preferentially, mounted to the landing gear 1h. However, instead of mounting the float bags 7a to the landing gear 1h, they may alternatively be mounted directly to the fuselage 2 at the lower fuselage region 2c.

According to one aspect, the capsizing avoidance buoyancy system 8 comprises one or more capsizing avoidance buoyancy devices 8a, which are preferentially also embodied as float bags, in particular inflatable float bags. Illustratively, a single capsizing avoidance buoyancy device 8a is shown.

By way of example, the capsizing avoidance buoyancy system 8 can be realized by using inflatable and inflating components that are currently used for implementing conventional emergency floatation systems. As described above, such components preferably comprise conventional float bags together with a pressurized gas cylinder or a gas generator including an electrical activation system located within a container. However, as such conventional emergency floatation systems are well-known to the person skilled in the art, a more detailed description thereof as well as a more detailed description of the capsizing avoidance buoyancy system 8 as such can be omitted for brevity and conciseness.

The capsizing avoidance buoyancy device 8a is preferentially inflated upon activation of the capsizing avoidance buoyancy system 8. Exemplarily, the capsizing avoidance buoyancy device 8a is at least partly roof mounted at the upper fuselage region 2d. However, this roof-mounting is only illustrated by way of example and not for limiting the invention accordingly. Instead, the capsizing avoidance buoyancy device 8a may alternatively be mounted to the helicopter 1 at any other position that is suitable to allow preventing capsizing of the helicopter 1 upon inflation.

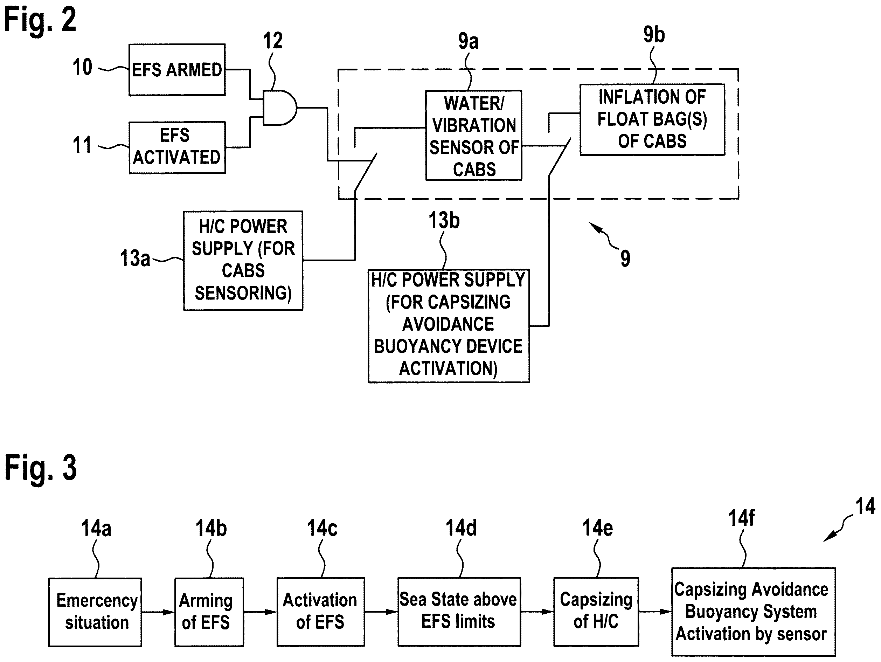

Figure 2 shows an exemplary capsizing avoidance buoyancy system actuation system 9. According to one aspect, the latter comprises at least a capsizing evaluation unit 9a and a capsizing avoidance buoyancy device inflation unit 9b. The capsizing evaluation unit 9a preferably comprises one or more sensors, preferentially one or more water and/or vibration sensors. The capsizing avoidance buoyancy device inflation unit 9b is adapted for inflation of one or more capsizing avoidance buoyancy devices (e. g. capsizing avoidance buoyancy device 8a of Figure 1) upon actuation.

According to one aspect, inflation of the one or more capsizing avoidance buoyancy devices is only enabled after activation of an associated emergency floatation system (e. g. associated emergency floatation system 7 of Figure 1), preferably after inflation of one or more float bags (e. g. float bags 7a of Figure 1) of the associated emergency floatation system. Accordingly, an emergency floatation system armed state detector 10 is provided for determining/indicating whether the associated emergency floatation system is ready for being activated and an emergency floatation system activated state detector 11 is provided for determining/indicating whether the associated emergency floatation system has been activated, i. e. whether the one or more float bags have been inflated.

By way of example, the detectors 10, 11 are implemented as switches, which are either turned "ON" or "OFF". Preferably, a respective "ON" switch state indicates inflation resp. activation, while a respective "OFF" switch state indicates that no inflation resp. no activation has occurred.

According to one aspect, an emergency floatation system state evaluator 12 is provided for evaluating a respective current state of the associated emergency floatation system, i. e. the one or more float bags. Therefore, the emergency floatation system state evaluator 12 is preferably at least similarly embodied to an AND gate and preferentially analyses data provided by the detectors 10, 11, i. e. determines respective switch states thereof.

If both switch states are "ON", the emergency floatation system state evaluator 12 preferably electrically couples a capsizing evaluation unit power supply 13a to the capsizing evaluation unit 9a and, thus, releases power supply from the power supply 13a to the capsizing evaluation unit 9a. Accordingly, supplying power from the power supply 13a to the capsizing evaluation unit 9a is only enabled after activation of the associated emergency floatation system so that the capsizing evaluation unit 9a is only activated after activation of the associated emergency floatation system, preferentially upon an emergency landing of a given helicopter (e. g. helicopter 1 of Figure 1) on water.

Upon electrically powering the capsizing evaluation unit 9a, the latter starts determining whether predetermined activation criteria are satisfied. By way of example, the predetermined activation criteria are satisfied if one or more of the following conditions is fulfilled: a respective sea state is above predetermined emergency floatation system limits, a respective inclination angle of the given helicopter with respect to a vertical reference line is above a predetermined limit, the given helicopter is comprised in a capsizing process and/or operation of a main rotor of the given helicopter (e. g. multi-blade main rotor 1a of Figure 1) is discontinued.

According to one aspect, if the capsizing evaluation unit 9a determines that the predetermined activation criteria are satisfied, the capsizing evaluation unit 9a preferably electrically couples a capsizing avoidance buoyancy device inflation unit power supply 13b to the capsizing avoidance buoyancy device inflation unit 9b and, thus, releases power supply from the power supply 13b to the inflation unit 9b. Accordingly, the inflation unit 9b is activated for inflating one or more capsizing avoidance buoyancy devices (e. g. capsizing avoidance buoyancy device 8a of Figure 1).

Figure 3 shows an exemplary capsizing avoidance buoyancy device inflation sequence 14, that can be implemented by means of the capsizing avoidance buoyancy system actuation system 9 of Figure 2, i. e. with the inventive helicopter 1 of Figure 1. The sequence 14 starts with an initial step 14a.

According to one aspect, in step 14a occurrence of an emergency situation is determined. More specifically, in step 14a it is determined whether ditching of a given helicopter (e. g. helicopter 1 of Figure 1) on water is imminent or has already occurred.

Then, in step 14b, it is determined whether a respective emergency floatation system (e. g. emergency floatation system 7 of Figure 1) is ready for being activated, i. e. whether the respective emergency floatation system is in armed state. Subsequently, in step 14c, it is determined whether the respective emergency floatation system has been activated, i. e. whether the respective emergency floatation system is in activated state. More specifically, step 14c may comprise a determination on whether one or more float bags of the respective emergency floatation system (e. g. float bags 7a of Figure 1) have been inflated.

Subsequently, in step 14d, it is determined whether a respective sea state is above predetermined emergency floatation system limits. Furthermore, in step 14e, it is determined whether the given helicopter is already in a capsizing situation, i. e. whether the given helicopter already rotated or is already rotating into capsized position. Preferably, steps 14d and 14e are performed by means of the capsizing evaluation unit 9a of Figure 2.

Finally, in step 14f, if the determinations in steps 14d, 14e are affirmative, a capsizing avoidance buoyancy device inflation unit of the given helicopter (e. g. inflation unit 9b of Figure 2) is activated for inflating one or more capsizing avoidance buoyancy devices (e. g. capsizing avoidance buoyancy device 8a of Figure 1). In other words, an underlying capsizing avoidance buoyancy system (e. g. capsizing avoidance buoyancy system 8 of Figure 1) is activated.

It should, however, be noted that the order of the steps 14a to 14f, as well as respective measures that are taken at specific steps, are merely exemplary and not for limiting the invention accordingly. Instead, other measures and/or another sequential procedure is likewise possible and, therefore, contemplated. For instance, step 14b may be performed prior to step 14a or step 14e may be performed prior to step 14d. Similarly, while step 14d is only described as a determination on whether a respective sea state is above predetermined emergency floatation system limits, it may more generally be intended to detect an instability state of the given helicopter that has ditched on the water. Such an instability state is e. g. given if a respective inclination angle of the given helicopter with respect to a vertical reference line is above a predetermined limit and/or if operation of a main rotor of the given helicopter (e. g. multi-blade main rotor 1a of Figure 1) is discontinued.

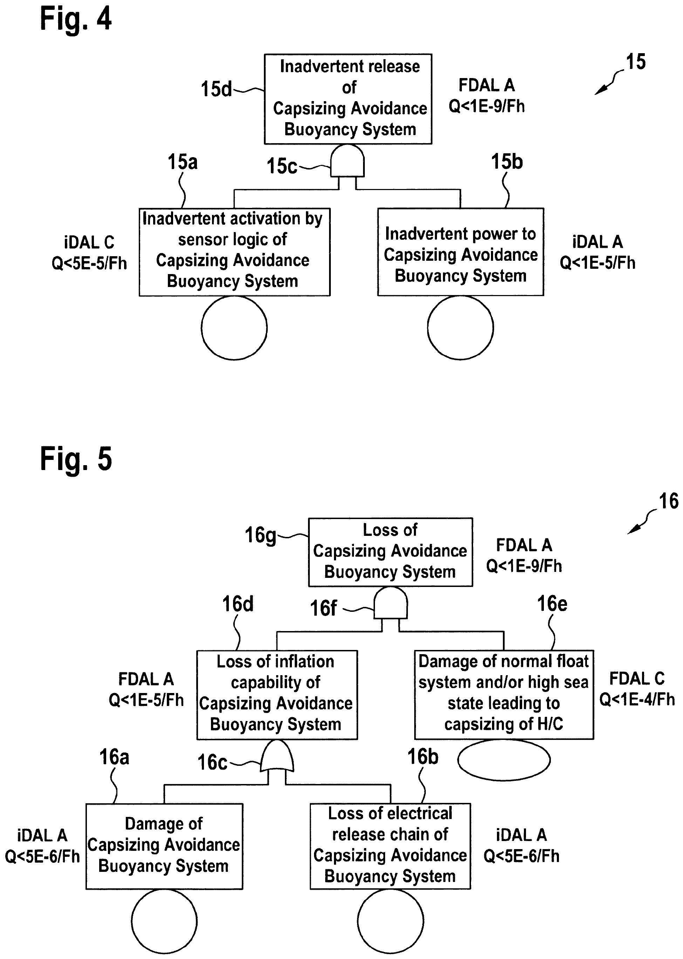

Figure 4 shows an exemplary inadvertent capsizing avoidance buoyancy system activation fault tree 15. Fault tree 15 represents a safety assessment that is based on requirements according to FAR Part 29.1309 or EASA CS 29.1309 for a classification "CATASTROPHIC" of an unintended release of the capsizing avoidance buoyancy system 8 of Figure 1. Accordingly, the capsizing avoidance buoyancy system 8 of Figure 1, i. e. its constituent components, are preferably embodied with respect to an inadvertent release such that they provide for a qualitative function development assurance level A (FDAL-A) according to SAE-ARP-4754-A and a quantitative requirement for a failure probability of Q<10⁻⁹/flight hour (Fh).

More specifically, with respect to an inadvertent capsizing avoidance buoyancy system activation by sensor, which is e. g. initiated by the capsizing evaluation unit 9a of Figure 2 and illustratively referred to with the reference sign 15a, a qualitative item development assurance level C (iDAL-C) and a quantitative requirement for a failure probability of Q<5^{∗}10⁻⁵/Fh should preferably be met. Furthermore, with respect to an inadvertent capsizing avoidance buoyancy system powering, which is e. g. initiated by the emergency floatation system state evaluator 12 of Figure 2 and illustratively referred to with the reference sign 15b, an iDAL-A and a requirement for a failure probability of Q<10⁻⁵/Fh should preferably be met.

As a result, when combining the qualitative assurance levels and the quantitative requirements according to 15a, 15b illustratively by means of an AND-conjunction 15c in the fault tree 15, a resultant FDAL-A and a resultant requirement for a failure probability of Q<10⁻⁹/Fh are obtained. As described above, this resultant FDAL-A and this resultant requirement for a failure probability of Q<10⁻⁹/Fh are preferably considered during design of the capsizing avoidance buoyancy system 8 of Figure 1, i. e. its constituent components, with respect to an inadvertent release, wherein the capsizing avoidance buoyancy system 8 of Figure 1, i. e. its constituent components is/are correspondingly configured, as illustratively indicated at reference sign 15d.

Figure 5 shows an exemplary capsizing avoidance buoyancy system loss fault tree 16. Fault tree 16 represents a safety assessment that is based on requirements according to FAR Part 29.1309 or EASA CS 29.1309 for a classification "CATASTROPHIC" of a loss of the capsizing avoidance buoyancy system 8 of Figure 1. Accordingly, the capsizing avoidance buoyancy system 8 of Figure 1, i. e. its constituent components, are preferably embodied with respect to a possible loss such that they provide for a FDAL-A according to SAE-ARP-4754-A and a requirement for a failure probability of Q<10⁻⁹/Fh.

More specifically, with respect to a damage of the capsizing avoidance buoyancy system 8 of Figure 1, such as e. g. of the capsizing avoidance buoyancy device 8a of Figure 1 and/or the capsizing avoidance buoyancy system actuation system 9 of Figure 2, which is illustratively referred to with the reference sign 16a, an iDAL-A and a requirement for a failure probability of Q<5^{∗}10⁻⁶/Fh should preferably be met. Furthermore, with respect to a loss of electrical chain for respective capsizing avoidance buoyancy devices, such as e. g. of the capsizing avoidance buoyancy device inflation unit power supply 13b of Figure 2, which is illustratively referred to with the reference sign 16b, an iDAL-A and a requirement for a failure probability of Q<5^{∗}10⁻⁶/Fh should preferably be met.

When combining the qualitative assurance levels and the quantitative requirements according to 16a, 16b illustratively by means of an OR-conjunction 16c in the fault tree 16, a resultant FDAL-A and a resultant requirement for a failure probability of Q<10⁻⁵/Fh are obtained. This resultant FDAL-A and this resultant requirement for a failure probability of Q<10⁻⁵/Fh are preferably considered during design of the capsizing avoidance buoyancy system 8 of Figure 1, i. e. its constituent components, with respect to a potential loss of inflation capability of the capsizing avoidance buoyancy system 8 of Figure 1, as illustratively indicated at reference sign 16d. Furthermore, with respect to a damage of the emergency floatation system 7 of Figure 1, such as e. g. of the float bags 7a of Figure 1, and/or with respect to a current sea state that may lead to capsizing of the helicopter 1 of Figure 1, both of which are illustratively referred to with the reference sign 16e, a FDAL-C and a requirement for a failure probability of Q<10⁻⁴/Fh should preferably be met.

As a result, when combining the qualitative assurance levels and the quantitative requirements according to 16d, 16e illustratively by means of an AND-conjunction 16f in the fault tree 16, a resultant FDAL-A and a resultant requirement for a failure probability of Q<10⁻⁹/Fh are obtained. As described above, this resultant FDAL-A and this resultant requirement for a failure probability of Q<10⁻⁹/Fh are preferably considered during design of the capsizing avoidance buoyancy system 8 of Figure 1, i. e. its constituent components, which is/are, thus, correspondingly configured with respect to a possible loss, as illustratively indicated at reference sign 16g.

In summary, based on the generic fault trees 15, 16 of Figure 4 and Figure 5, requirements for the emergency floatation system 7 of Figure 1 and, more particularly, for the capsizing avoidance buoyancy system 8 of Figure 1 and its constituent components are defined. The capsizing avoidance buoyancy device 8 of Figure 1 itself, which exemplarily comprises a roof mounted buoyancy device 8a in Figure 1, which is preferably connected to a gas cylinder and a valve, should preferentially be designed to fulfill a quantitative requirement significant below 10⁻⁹/Fh. The qualitative requirement iDAL A could be seen according SAE ARP 4754 as fulfilled.

Furthermore, the quantitative requirement for a respective electrical release is also required to be significant below 10⁻⁵/Fh, which can be fulfilled by activation of the capsizing avoidance buoyancy system 8 of Figure 1 (i. e. the roof mounted buoyancy device 8a of Figure 1) in combination with a sensor detecting water and/or stop of rotor. A respective qualitative iDAL can be fulfilled by using a powering route and an independent release route, both iDAL-B or one of them iDAL-A and the other one iDAL-C. Simple sensors and contactors are able to fulfill these requirements. Moreover, an actuation logic, i. e. the capsizing avoidance buoyancy system actuation system 9 of Figure 2, can be by this sufficiently developed according iDAL-C.

In addition, as described above, the capsizing avoidance buoyancy system of Figure 1 is linked to the emergency floatation system 7 of Figure 1. If the latter is not already activated, the capsizing avoidance buoyancy system of Figure 1 preferably remains unpowered. For the emergency floatation system 7 of Figure 1, respective safety figures for unintended activation are already above the "CATASTROPHIC" event classification described above. More specifically, there are already two different events defined, i. e. flight over water with emergency floatation system already armed and flight over land with emergency floatation system not armed. Thus, the failure probability for unintended activation of the dedicated sensor(s) of the capsizing avoidance buoyancy system 8 of Figure 1 is below 10⁻⁵/Fh.

### Reference List

- 1: rotary wing aircraft
- 1a: multi-blade main rotor
- 1b, 1c, 1d, 1e: rotor blades
- 1f: rotor head
- 1g: rotor shaft
- 1h: landing gear
- 2: fuselage
- 2a: cabin
- 2b: cockpit
- 2c: lower fuselage region
- 2d: upper fuselage region
- 3: tail boom
- 3a: horizontal stabilizer
- 4: counter-torque device
- 4a: tail rotor
- 5: vertical stabilizer
- 6: bumper
- 7: emergency floatation system
- 7a: float bags
- 8: capsizing avoidance buoyancy system
- 8a: capsizing avoidance buoyancy device
- 9: capsizing avoidance buoyancy system actuation system
- 9a: capsizing evaluation unit
- 9b: capsizing avoidance buoyancy device inflation unit
- 10: emergency floatation system armed state detector
- 11: emergency floatation system activated state detector
- 12: emergency floatation system state evaluator
- 13a: capsizing evaluation unit power supply
- 13b: capsizing avoidance buoyancy device inflation unit power supply
- 14: capsizing avoidance buoyancy device inflation sequence
- 14a: emergency situation occurrence
- 14b: emergency floatation system armed state
- 14c: emergency floatation system activated state
- 14d: aircraft floatation instability state
- 14e: imminent aircraft capsizing situation
- 14f: capsizing avoidance buoyancy device inflation
- 15: inadvertent capsizing avoidance buoyancy system activation fault tree
- 15a: inadvertent capsizing avoidance buoyancy system activation by sensor
- 15b: inadvertent capsizing avoidance buoyancy system powering
- 15c: AND-conjunction
- 15d: inadvertent capsizing avoidance buoyancy system actuation
- 16: capsizing avoidance buoyancy system loss fault tree
- 16a: damage of capsizing avoidance buoyancy device
- 16b: loss of electrical chain for capsizing avoidance buoyancy device
- 16c: OR-conjunction
- 16d: loss of capsizing avoidance buoyancy device inflation capability
- 16e: damage of emergency floatation system leading to aircraft capsizing state
- 16f: AND-conjunction
- 16g: loss of capsizing avoidance buoyancy system in aircraft emergency condition

## Claims

1. An aircraft (1) with an emergency floatation system (7), the emergency floatation system (7) being activated upon an emergency landing of the aircraft (1) on water, for preventing at least sinking of the aircraft (1), **characterized in that** a capsizing avoidance buoyancy system (8) is provided, the capsizing avoidance buoyancy system (8) being activated if predetermined activation criteria are satisfied and only after activation of the emergency floatation system (7) upon an emergency landing of the aircraft (1) on water, for preventing at least capsizing of the aircraft (1) wherein the capsizing avoidance buoyancy system (8) comprises at least one capsizing evaluation unit (9a), the at least one capsizing evaluation unit (9a) being activated after activation of the emergency floatation system (7) upon an emergency landing of the aircraft (1) on water, in order to determine whether the predetermined activation criteria are satisfied, **characterized in that** the at least one capsizing evaluation unit (9a) is electrically coupled to an associated power supply (13a), wherein supplying power from the associated power supply (13a) to the at least one capsizing evaluation unit (9a) is only enabled after activation of the emergency floatation system (7).

2. The aircraft (1) of claim 1,
**characterized in that** the emergency floatation system (7) comprises at least one float bag (7a), the at least one float bag (7a) being inflated upon activation of the emergency floatation system (7).

3. The aircraft (1) of claim 2,
**characterized in that** the capsizing avoidance buoyancy system (8) comprises at least one capsizing avoidance buoyancy device (8a), the at least one capsizing avoidance buoyancy device (8a) being inflated upon activation of the capsizing avoidance buoyancy system (8).

4. The aircraft (1) of claim 3,
**characterized in that** inflation of the at least one capsizing avoidance buoyancy device (8a) is only enabled after inflation of the at least one float bag (7a).

5. The aircraft (1) of any of the claims 1 to 4, **characterized in that** the capsizing avoidance buoyancy system (8) comprises at least one capsizing avoidance buoyancy device inflation unit (9b), the at least one capsizing avoidance buoyancy device inflation unit (9b) being activated for inflating the at least one capsizing avoidance buoyancy device (8a) if the at least one capsizing evaluation unit (9a) determines that the predetermined activation criteria are satisfied.

6. The aircraft (1) of claim 5, **characterized in that** the at least one capsizing avoidance buoyancy device inflation unit (9b) is electrically coupled to an associated power supply (13b), wherein supplying power from the associated power supply (13b) to the at least one capsizing avoidance buoyancy device inflation unit (9b) is only enabled after the at least one capsizing evaluation unit (9a) determines that the predetermined activation criteria are satisfied.

7. The aircraft (1) of claim 1, **characterized in that** the predetermined activation criteria are satisfied if a respective sea state is above predetermined emergency floatation system limits.

8. The aircraft (1) of claim 1, **characterized in that** the predetermined activation criteria are satisfied if a respective inclination angle of the aircraft (1) with respect to a vertical reference line is above a predetermined limit.

9. The aircraft (1) of claim 1, **characterized in that** the predetermined activation criteria are satisfied if it is determined that the aircraft (1) is comprised in a capsizing process.

10. The aircraft (1) of claim 1, **characterized in that** activation of the capsizing avoidance buoyancy system (8) is performed automatically and operator-independently.

11. The aircraft (1) of claim 1, **characterized by** a fuselage (2) that defines a lower fuselage region (2c) and an upper fuselage region (2d), the emergency floatation system (7) being at least partly arranged in the lower fuselage region (2c) and the capsizing avoidance buoyancy system (8) being at least partly arranged in the upper fuselage region (2d).

12. The aircraft (1) of claim 11, which is embodied as a rotary wing aircraft, in particular as a helicopter.

13. The aircraft (1) of claim 12, **characterized by** a main rotor (1a), wherein the predetermined activation criteria are satisfied if operation of the main rotor (1a) is discontinued.

## Patentansprüche

1. Luftfahrzeug (1) mit einem Notschwimmersystem (7), wobei das Notschwimmersystem (7) bei einer Notlandung des Luftfahrzeugs (1) auf dem Wasser aktiviert wird, um zumindest das Sinken des Luftfahrzeugs (1) zu verhindern, **dadurch gekennzeichnet,**
**dass** ein Kentervermeidungsauftriebssystem (8) vorgesehen ist, wobei das Kentervermeidungsauftriebssystem (8) aktiviert wird, wenn vorgegebene Aktivierungskriterien erfüllt sind und nur nach Aktivierung des Notschwimmersystems (7) bei einer Notlandung des Luftfahrzeugs (1) auf dem Wasser, um zumindest ein Kentern des Luftfahrzeugs (1) zu verhindern, wobei das Kentervermeidungsauftriebssystem (8) mindestens eine Kenterauswerteeinheit (9a) aufweist, wobei die mindestens eine Kenterauswerteeinheit (9a) nach Aktivierung des Notschwimmersystems (7) bei einer Notlandung des Flugzeugs (1) auf dem Wasser aktiviert wird, um festzustellen, ob die vorgegebenen Aktivierungskriterien erfüllt sind, **dadurch gekennzeichnet, dass** die mindestens eine Kenterauswerteeinheit (9a) mit einer zugehörigen Stromversorgung (13a) elektrisch gekoppelt ist, wobei die Versorgung der mindestens einen Kenterauswerteeinheit (9a) mit Strom aus der zugehörigen Stromversorgung (13a) erst nach Aktivierung des Notschwimmersystems (7) freigegeben wird.

2. Luftfahrzeug (1) nach Anspruch 1,
**dadurch gekennzeichnet, dass** das Notschwimmersystem (7) mindestens einen Schwimmersack (7a) umfasst, wobei der mindestens eine Schwimmersack (7a) bei Aktivierung des Notschwimmersystems (7) aufgeblasen wird.

3. Luftfahrzeug (1) nach Anspruch 2,
**dadurch gekennzeichnet, dass** das Kentervermeidungsauftriebssystem (8) mindestens eine Kentervermeidungsauftriebsvorrichtung (8a) umfasst, wobei die mindestens eine Kentervermeidungsauftriebsvorrichtung (8a) bei Aktivierung des Kentervermeidungsauftriebssystems (8) aufgeblasen wird.

4. Luftfahrzeug (1) nach Anspruch 3,
**dadurch gekennzeichnet, dass** das Aufblasen der mindestens einen Kentervermeidungsauftriebsvorrichtung (8a) erst nach dem Aufblasen des mindestens einen Schwimmersacks (7a) freigegeben ist.

5. Luftfahrzeug (1) nach einem der Ansprüche 1 bis 4,
**dadurch gekennzeichnet, dass** das Kentervermeidungsauftriebssystem (8) mindestens eine Kentervermeidungsauftriebsvorrichtungs-Aufblaseinheit (9b) umfasst, wobei die mindestens eine Kentervermeidungsauftriebsvorrichtungs-Aufblaseinheit (9b) zum Aufblasen der mindestens einen Kentervermeidungsauftriebsvorrichtung (8a) aktiviert wird, wenn die mindestens eine Kenterauswerteeinheit (9a) feststellt, dass die vorgegebenen Aktivierungskriterien erfüllt sind.

6. Luftfahrzeug (1) nach Anspruch 5,
**dadurch gekennzeichnet, dass** die mindestens eine Kentervermeidungsauftriebsvorrichtungs-Aufblaseinheit (9b) elektrisch mit einer zugehörigen Stromversorgung (13b) gekoppelt ist, wobei die Versorgung der mindestens einen Kentervermeidungsauftriebsvorrichtungs-Aufblaseinheit (9b) mit Strom von der zugehörigen Stromversorgung (13b) erst dann freigegeben wird, wenn die mindestens eine Kenterauswerteeinheit (9a) feststellt, dass die vorgegebenen Aktivierungskriterien erfüllt sind.

7. Luftfahrzeug (1) nach Anspruch 1,
**dadurch gekennzeichnet, dass** die vorgegebenen Aktivierungskriterien erfüllt sind, wenn ein entsprechender Seegang über vorgegebenen Grenzen des Notschwimmersystems liegt.

8. Luftfahrzeug (1) nach Anspruch 1,
**dadurch gekennzeichnet, dass** die vorgegebenen Aktivierungskriterien erfüllt sind, wenn ein jeweiliger Neigungswinkel des Luftfahrzeugs (1) in Bezug auf eine vertikale Bezugslinie über einem vorgegebenen Grenzwert liegt.

9. Luftfahrzeug (1) nach Anspruch 1,
**dadurch gekennzeichnet, dass** die vorgegebenen Aktivierungskriterien erfüllt sind, wenn festgestellt wird, dass sich das Luftfahrzeug (1) in einem Kentervorgang befindet.

10. Luftfahrzeug (1) nach Anspruch 1,
**dadurch gekennzeichnet, dass** die Aktivierung des Kentervermeidungsauftriebssystems (8) automatisch und bedienerunabhängig erfolgt.

11. Luftfahrzeug (1) nach Anspruch 1,
**gekennzeichnet durch** einen Rumpf (2), der einen unteren Rumpfbereich (2c) und einen oberen Rumpfbereich (2d) definiert, wobei das Notschwimmersystem (7) zumindest teilweise in dem unteren Rumpfbereich (2c) und das Kentervermeidungsauftriebssystem (8) zumindest teilweise in dem oberen Rumpfbereich (2d) angeordnet ist.

12. Luftfahrzeug (1) nach Anspruch 11, das als Drehflügler, insbesondere als Hubschrauber, ausgebildet ist.

13. Luftfahrzeug (1) nach Anspruch 12,
**gekennzeichnet durch** einen Hauptrotor (1a), wobei die vorgegebenen Aktivierungskriterien erfüllt sind, wenn der Betrieb des Hauptrotors (1a) eingestellt ist.

## Revendications

1. Aéronef (1) avec un système de flottabilité de secours (7), le système de flottabilité de secours (7) étant activé lors d'un posé d'urgence de l'aéronef (1) sur l'eau, pour au moins empêcher l'aéronef (1) de sombrer,
**caractérisé en ce qu'**un système de flottabilité contre le chavirement (8) est prévu, le système de flottabilité contre le chavirement (8) étant activé si des critères d'activation prédéterminés sont remplis et seulement après l'activation du système de flottabilité de secours (7) lors d'un posé d'urgence de l'aéronef (1) sur l'eau, pour empêcher au moins l'aéronef (1) de chavirer,
dans lequel ledit au moins un dispositif de flottabilité contre le chavirement est doté d'au moins une unité de gonflage (9b), ladite au moins une unité d'évaluation du chavirement (9a) étant activée après l'activation du système de flottabilité de secours (7) lors d'un posé d'urgence de l'aéronef (1) sur l'eau, afin de déterminer si les critères d'activation prédéterminés sont remplis, **caractérisé en ce que** ladite au moins une unité d'évaluation du chavirement (9a) est couplée électriquement à une source d'alimentation électrique (13a) associée, dans lequel l'alimentation électrique par la source d'alimentation électrique (13a) associée de ladite au moins une unité d'évaluation du chavirement (9a) n'est possible qu'après l'activation du système de flottabilité de secours (7).

2. Aéronef (1) selon la revendication 1,
**caractérisé en ce que** le système de flottabilité de secours (7) comprend au moins un ballonnet de flottaison (7a), ledit au moins un ballonnet de flottaison (7a) étant gonflé lors de l'activation du système de flottabilité de secours (7).

3. Aéronef (1) selon la revendication 2,
**caractérisé en ce que** le système de flottabilité contre le chavirement (8) comprend au moins un dispositif de flottabilité contre le chavirement (8a), ledit au moins un dispositif de flottabilité contre le chavirement (8a) étant gonflé lors de l'activation du système de flottabilité contre le chavirement (8).

4. Aéronef (1) selon la revendication 3,
**caractérisé en ce que** le gonflage dudit au moins un dispositif de flottabilité contre le chavirement (8a) n'est possible qu'après le gonflage dudit au moins un ballonnet de flottaison (7a).

5. Aéronef (1) selon l'une quelconque des revendications 1 à 4,
**caractérisé en ce que** le système de flottabilité contre le chavirement (8) comprend au moins une unité de gonflage du dispositif de flottabilité contre le chavirement (9b), ladite au moins une unité de gonflage du dispositif de flottabilité contre le chavirement (9b) étant activée pour gonfler ledit au moins un dispositif de flottabilité contre le chavirement (8a) si ladite au moins une unité d'évaluation du chavirement (9a) détermine que les critères d'activation prédéterminés sont remplis.

6. Aéronef (1) selon la revendication 5,
**caractérisé en ce que** ladite au moins une unité de gonflage du dispositif de flottabilité contre le chavirement (9b) est couplée électriquement à une source d'alimentation électrique (13b) associée, dans lequel l'alimentation électrique par la source d'alimentation électrique (13b) associée de ladite au moins une unité de gonflage du dispositif de flottabilité contre le chavirement (9b) n'est possible qu'après que ladite au moins une unité d'évaluation du chavirement (9a) ait déterminé que les critères d'activation prédéterminés sont remplis.

7. Aéronef (1) selon la revendication 1,
**caractérisé en ce que** les critères d'activation prédéterminés sont remplis si un état de la mer respectif dépasse les limites prédéterminées du système de flottabilité de secours.

8. Aéronef (1) selon la revendication 1,
**caractérisé en ce que** les critères d'activation prédéterminés sont remplis si un angle respectif d'inclinaison de l'aéronef (1) par rapport à une ligne de référence verticale dépasse une limite prédéterminée.

9. Aéronef (1) selon la revendication 1,
**caractérisé en ce que** les critères d'activation prédéterminés sont remplis s'il est déterminé que l'aéronef (1) est engagé dans un processus de chavirement.

10. Aéronef (1) selon la revendication 1,
**caractérisé en ce que** l'activation du système de flottabilité contre le chavirement (8) est exécutée automatiquement et indépendamment d'un opérateur.

11. Aéronef (1) selon la revendication 1,
**caractérisé par** un fuselage (2) qui définit une zone de fuselage inférieure (2c) et une zone de fuselage supérieure (2d), le système de flottabilité de secours (7) étant au moins en partie aménagé dans la zone de fuselage inférieure (2c) et le système de flottabilité contre le chavirement (8) étant au moins en partie aménagé dans la zone de fuselage supérieure (2d).

12. Aéronef (1) selon la revendication 11, lequel est mis en œuvre sous la forme d'un aéronef à voilure tournante, en particulier sous la forme d'un hélicoptère.

13. Aéronef (1) selon la revendication 12,
**caractérisé par** un rotor principal (1a), dans lequel les critères d'activation prédéterminés sont remplis si le fonctionnement du rotor principal (1a) est interrompu.
